(19) **Europäisches Patentamt / European Patent Office / Office européen des brevets**

(11) **EP 1 640 136 B1**

(12) **EUROPEAN PATENT SPECIFICATION**

(45) Date of publication and mention
of the grant of the patent:
**13.02.2013 Bulletin 2013/07**

(51) Int Cl.:
*B29C 45/84* (2006.01)          *B29C 45/76* (2006.01)
*G05B 19/4062* (2006.01)

(21) Application number: **04720173.6**

(22) Date of filing: **12.03.2004**

(86) International application number:
**PCT/JP2004/003262**

(87) International publication number:
**WO 2004/080690 (23.09.2004 Gazette 2004/39)**

(54) **MOLDING DEVICE AND CONTROL METHOD THEREOF**

FORMVORRICHTUNG UND STEUERVERFAHREN DAFÜR

DISPOSITIF DE MOULAGE ET PROCEDE DE COMMANDE DE CELUI-CI

(84) Designated Contracting States:
**AT BE BG CH CY CZ DE DK EE ES FI FR GB GR
HU IE IT LI LU MC NL PL PT RO SE SI SK TR**

(30) Priority: **13.03.2003 JP 2003068441**

(43) Date of publication of application:
**29.03.2006 Bulletin 2006/13**

(73) Proprietor: **SUMITOMO HEAVY INDUSTRIES, LTD.
Shinagawa-ku,
Tokyo 1416025 (JP)**

(72) Inventor: **KONNO, Takeshi,
c/o SUMITOMO HEAVY INDUSTRIES, LTD.
Shinagawa-ku,
Tokyo 1416025 (JP)**

(74) Representative: **Emde, Eric
Wagner & Geyer
Gewürzmühlstrasse 5
80538 München (DE)**

(56) References cited:
| | |
|---|---|
| DE-A1- 19 925 302 | DE-C1- 19 801 881 |
| JP-A- 1 141 715 | JP-A- 1 196 322 |
| JP-A- 1 244 816 | JP-A- 6 134 825 |
| JP-A- 7 088 616 | JP-A- 9 097 480 |
| JP-A- 9 322 588 | JP-A- 56 073 346 |
| JP-A- 59 217 119 | JP-A- 63 118 224 |
| JP-A- 63 166 513 | JP-A- 63 166 513 |
| JP-A- 2000 220 043 | JP-A- 2001 287 254 |
| JP-B2- 2 039 973 | JP-Y2- 2 042 435 |
| US-A1- 2002 005 599 | |

**Description**

TECHNICAL FIELD

The present invention relates to a molding machine and a control method therefor.

BACKGROUND ART

Conventionally, an anomaly determination apparatus has been disposed in order to determine whether an anomaly has occurred in a molding machine (e.g., an injection molding machine), which is a predetermined machine apparatus, through drive of a motor.

In an injection molding machine, resin heated and melted in a heating cylinder is injected into a cavity of a mold apparatus so that the cavity is filled with the molten resin. The molten resin is then cooled and solidified within the cavity so as to obtain a molded article. For such molding, the mold apparatus comprises a stationary mold and a movable mold. The movable mold is advanced and retracted through activation of a toggle mechanism of a mold clamping apparatus so that the movable mold is brought into contact with and separated from the stationary mold, to thereby perform mold closing, mold clamping, and mold opening operations of the mold apparatus.

In a motor-driven mold clamping apparatus in which a motor is used as a means for activating the toggle mechanism, current is supplied to coils of the motor so as to drive the motor for generation of rotational motion, which is converted to linear motion by means of, for example, a ball screw mechanism, and the linear motion is transmitted to the toggle mechanism. For such an operation, the output shaft of the motor is connected to one of a ball nut and a ball screw shaft, which constitute the ball screw mechanism; e.g., the ball screw shaft; and a crosshead, which partially constitutes the toggle mechanism, is connected to the ball nut. Rotation of the output shaft is transmitted to the ball screw shaft, whereby the ball nut is advanced and retracted, and thus, the crosshead is advanced and retracted.

A control section is provided in order to drive the motor. Mold open-close processing means of the control section performs mold open-close processing in order to, for example, control motor rotational speed; i.e., rotational speed of the motor, which represents speed at which a movable platen advances at the time of mold closing, and control motor torque; i.e., torque of the motor, which represents mold clamping force at the time of mold clamping.

For such control, a target motor torque, which represents a motor torque serving as a target, is set; and the current supplied to the coils is detected by means of a current sensor. The control section fetches the target motor torque and the current detected (i.e., detected current), and performs feedback control on the basis of the target motor torque and the detected current to thereby control the current supplied to the motor.

Incidentally, a foreign object may become caught between the stationary mold and the movable mold. In such a case, when the drive of the motor is continued, the mold apparatus, the toggle mechanism, the motor, etc. may be damaged. In view of this, the above-described anomaly determination apparatus is configured to calculate a predetermined current detection value on the basis of the detected current; determine, on the basis of the current detection value, whether an anomaly has occurred in the injection molding machine; and stop the injection molding machine upon determination that an anomaly has occurred.

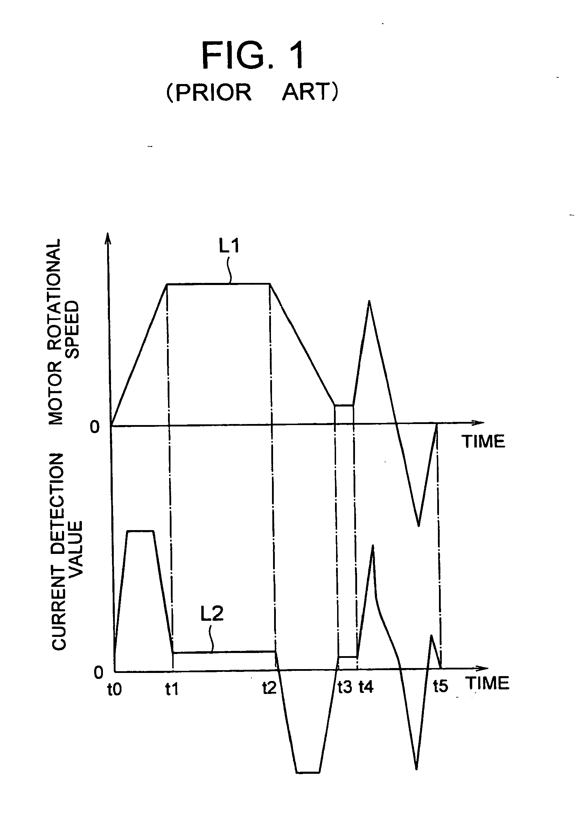

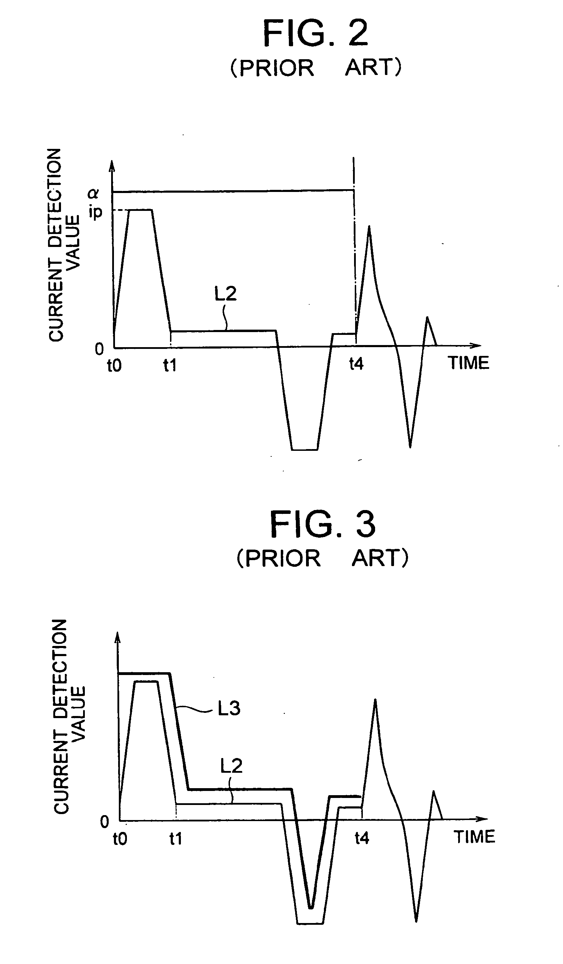

FIG. 1 is a pair of time charts showing the relation between motor rotational speed and current detection value in a conventional mold clamping apparatus. FIG. 2 is a time chart showing the relation between reference current value and current detection value in a conventional anomaly determination apparatus.

During a period of mold closing, the motor is driven in accordance with a predetermined target motor torque. As a result, the movable platen is accelerated upon start of the mold closing, is advanced at a constant high speed, and is then decelerated. After the movable mold comes into contact with the stationary mold to thereby complete a mold touch operation, acceleration and deceleration are performed so as to stretch the toggle mechanism such that a predetermined mold clamping force is generated, and then movable platen is stopped. During this operation, the motor rotational speed changes, for example, as indicated by line L1 of FIG. 1. Specifically, at timing t0, the motor rotational speed starts to increase from zero (0) at a predetermined acceleration, and at timing t1, the motor rotational speed becomes constant. At timing t2, the motor rotational speed starts to decrease at a predetermined deceleration, and at timing t3, the motor rotational speed becomes constant. After the mold touch is effected at time t4, acceleration and deceleration are performed during a period up to timing t5, and the motor rotational speed finally becomes zero at timing t5.

In accordance with changes in the motor rotational speed, the current detection value changes as indicated by line L2 of FIG. 1. In view of this, as shown in FIG. 2, a reference current value $\alpha$ is set on the basis of the maximum value ip of the assumed current detection value during a period in which the motor rotational speed increases at the predetermined acceleration. When the current detection value exceeds the reference current value $\alpha$, the anomaly determination apparatus determines that an anomaly has occurred in the injection molding machine.

The conventional anomaly determination apparatus can determine whether an anomaly has occurred in the injection molding machine during a period in which the motor rotational speed increases at a predetermined acceleration; e.g., the period from timing t0 to timing t1, because the current detection value increases. However, in a period in which the motor rotational speed is constant or decreases at a predetermined deceleration, and thus the current detection value decreases; e.g., in the period from timing t1 to timing t4, the difference between the current detection value and reference current value $\alpha$ becomes large.

Accordingly, even when a foreign object is caught between the stationary mold and the movable mold in the period of timing t1 to timing t4 and the current detection value increases, the anomaly determination apparatus encounters difficulty in determining whether an anomaly has occurred in the injection molding machine.

In view of the foregoing, there can be employed an anomaly determination apparatus in which the reference current value $\alpha$ is changed in accordance with a pattern determined on the basis of the assumed current detection value, and when the current detection value exceeds the reference current value $\alpha$ (t), which changes with elapse of time, the apparatus determines that an anomaly has occurred in the injection molding machine.

FIG. 3 is a time chart showing the relation between reference current value and current detection value in another conventional anomaly determination apparatus.

In this case, a reference current value $\alpha$ (t) as indicated by line L3 is set to correspond to the detection current value indicated by line L2. Accordingly, even during a period in which the motor rotational speed is constant or decreases at a predetermined deceleration, and thus the current detection value decreases; e.g., during the period from timing t1 to timing t4, the difference between the current detection value and reference current value $\alpha$(t) does not become large.

As a result, when a foreign object is caught between the stationary mold and the movable mold during the period of timing t1 to timing t4 and the current detection value increases, the anomaly determination apparatus can determine, without fail, that an anomaly has occurred in the injection molding machine.

However, since the current detection value calculated on the basis of the actually detected current involves noise stemming from jumping, high-frequency components, time shift, etc., the apparatus may erroneously determine that an anomaly has occurred in the injection molding machine.

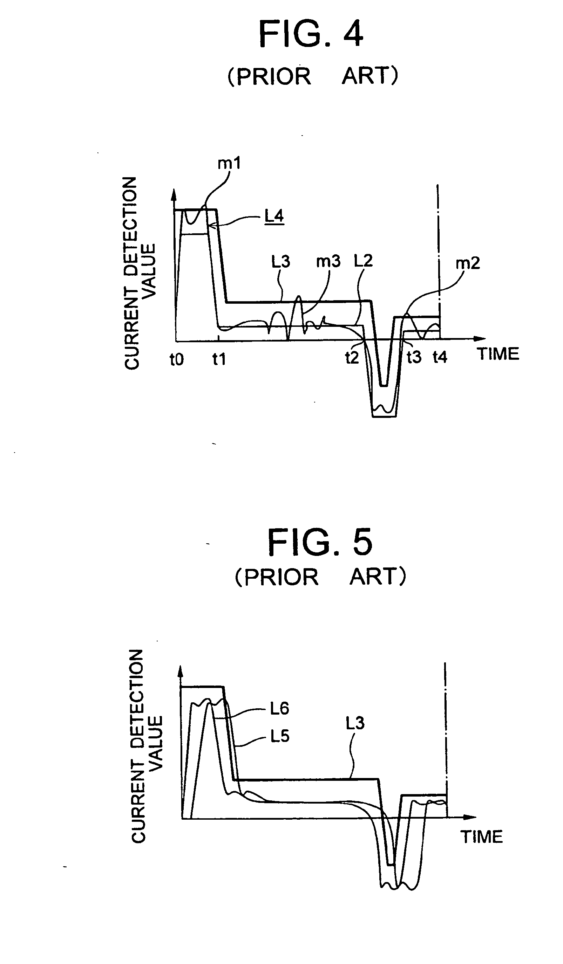

FIG. 4 is a first time chart showing a state of anomaly determination in the conventional anomaly determination apparatus; and FIG. 5 is a second time chart showing a state of anomaly determination in the conventional anomaly determination apparatus.

In these drawings, line L2 shows a current detection value; line L3 shows the reference current value $\alpha$ (t); lines L4 and L5 each show a current detection value calculated on the basis of the actually detected current; and line L6 shows the assumed current detection value.

During periods in which the current detection value becomes constant after having increased, such as a period of timing t0 to timing t1 and a period of timing t3 to timing t4, jumpings m1 and m2 may occur because of overshoot, whereby the current detection value may exceed the reference current value $\alpha$ (t). Further, since the calculated current detection value includes a large quantity of a high-frequency component m3, the current detection value may exceed the reference current value $\alpha$ (t).

Moreover, in some cases, due to mechanical play of the mold clamping apparatus, as shown in FIG. 5, a time shift may be generated between the current detection value indicated by line L5 and calculated on the basis of the actually detected current, and the assumed current detection value indicated by line L6. In such a case, the current detection value may exceed the reference current value $\alpha$ (t).

In a case where noises are generated stemming from the jumpings m1 and m2, the high-frequency component m3, the time shift, etc., and the current detection value exceeds the reference current value $\alpha$ (t), the apparatus may erroneously determine that an anomaly has occurred in the injection molding machine even when no foreign object is caught between the stationary mold and the movable mold.

JP 01-141,715 A discloses a method and apparatus for monitoring dwell process of motorized injection molder. To improve the detecting efficiency of molding abnormality by a method wherein deviations between the integral value from the start to the finish of dwelling of the detected load currents of the injection motor of an injection molder and the predetermined value, which is set in advance, is compared with each other, detected values of the load currents of an injection motor obtained with a current detector are inputted to an integrator so as to be continuously integrated from the start to the finish of a dwelling process with respect to time in order to obtain a final integral value. On the other hand, the predetermined value is inputted in a setter in advance. Next, the final integral value, which is obtained with the integrator, and the predetermined value, which is inputted in the setter, are compared with each other in a comparator. As a result, if the final integral value deviates from the predetermined value, an abnormality signal is issued to a control device.

JP 01-196,322 A discloses an overload operation descrimination method and device for motorized injection device. To set proper molding conditions easily by judging whether it is a condition for continuing the operation or not from the time integral value of the current value supplied to a motor or the time integral value of the current value supplied to the motor multiplied by the revolution speed of the motor, current to be supplied to a motor during the molding cycle is sensed by a current sensor and the sensed current value is time-integrated by an integrator during one molding cycle. The integral value found by the integrator is compared with the reference value from a reference value setting device in a comparison device. In case the integral value from the integrator is smaller than the reference value from the reference value setting device, a signal is not put out of the comparison device. When the integral value is more than the reference value, a signal is put out to an indicator and actuates the same. When the indicator is actuated and the operation is continued, a safety circuit is actuated to stop the operation, and the forming conditions, therefore, should be altered preliminarily.

DE 199 25 302 A1 relates to secure closure of the tool closure unit on a plastics injection molding machine by measurement of servomotor current between closed and open positions and storing values in a control unit.

US 2002/005599 A1 provides a method which makes it possible to reliably detect malfunctions during the ejecting step without rendering the injection molding machine more complicated. An ejector pin is incorporated in the movable die. This ejector pin is connected, via an ejector plate, a connecting rod, a connecting plate and a feed screw, with a servo motor. The force for ejecting the ejector pin pushing a molded product is measured from the driving torque of a servo motor. In this invention, the relationship between driving torque and elapsed time from the initiation of ejection of the molded product is stored as a reference pattern. The tolerance limit and monitoring interval of driving torque are preset relative to the reference pattern. When the value of driving torque falls outside the tolerance limit during the ejecting step, it is judged as a malfunction, and an alarm is generated to stop the machine in a safe state.

An object of the present invention is to solve the above-mentioned problems in the conventional anomaly determination apparatus and to provide a molding machine and a control method therefor which can reliably determine whether an anomaly has occurred in the molding machine.

## DISCLOSURE OF THE INVENTION

To achieve the above object, a molding machine according to the present invention is provided as set forth in claim 1. Further, a control method for a molding machine is provided as set forth in claim 5. Preferred embodiments of the present invention may be gathered from the dependent claims.

In this case, since the anomaly determination processing is performed on the basis of the integral value of the anomaly determination index, high-frequency components contained in the anomaly determination index can be removed. Further, even when noise is generated in the anomaly determination index stemming from jumping, time shift, etc., influences of the noise can be cancelled out. Accordingly, the anomaly determination processing can be accurately performed, and the determination as to whether an anomaly has occurred in a molding machine can be performed reliably.

## BRIEF DESCRIPTION OF THE DRAWINGS

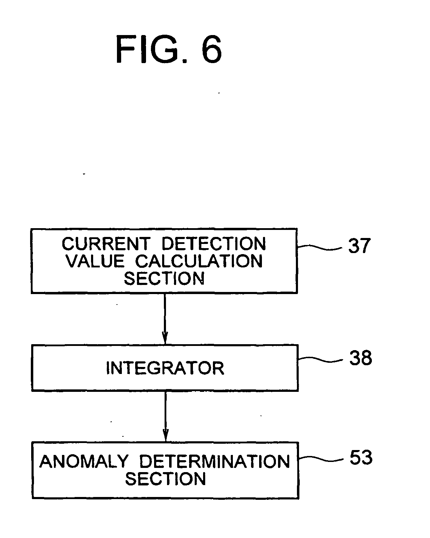

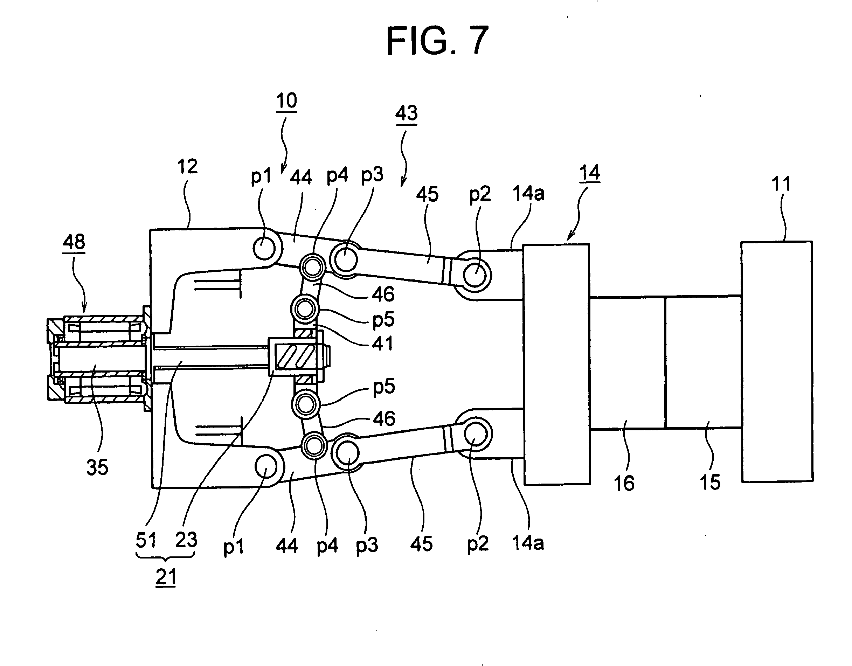

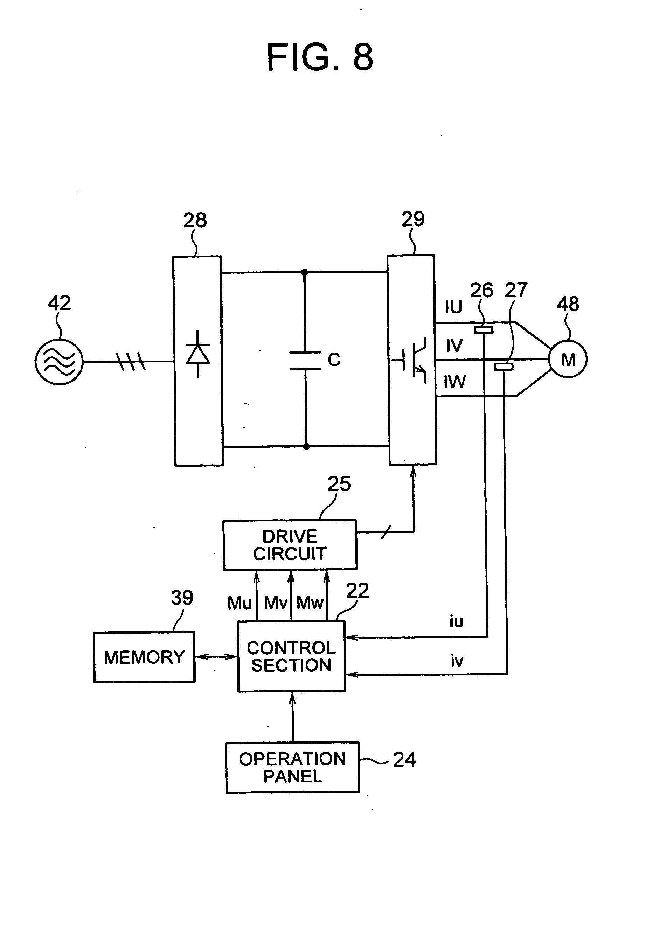

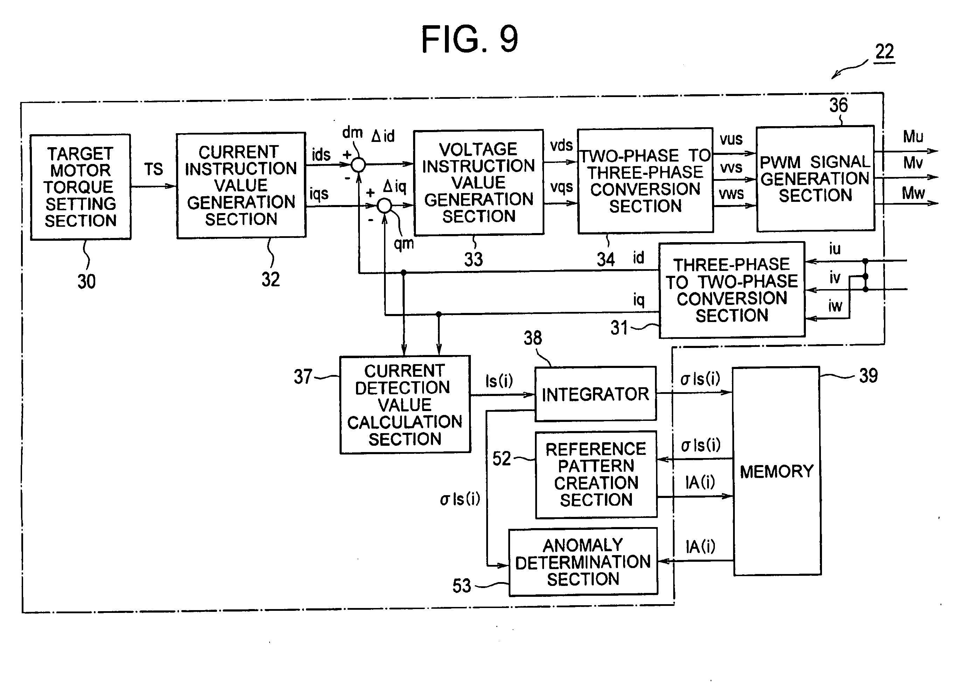

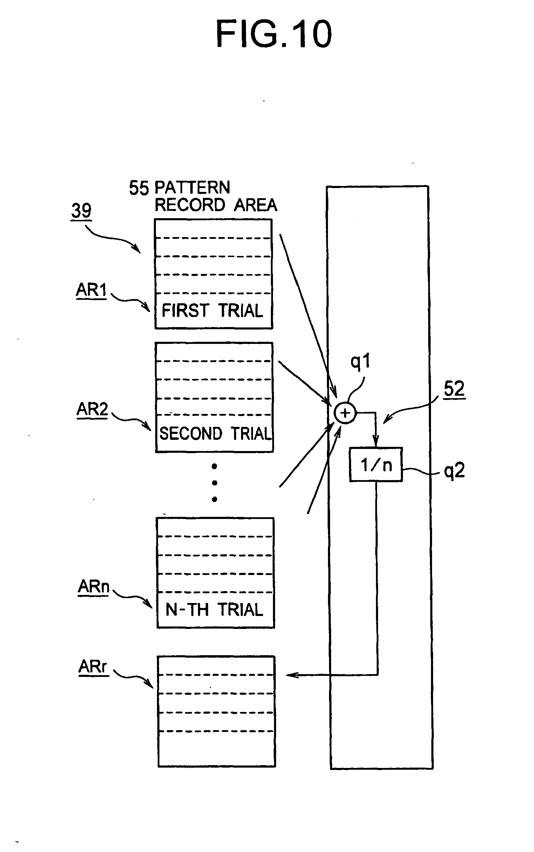

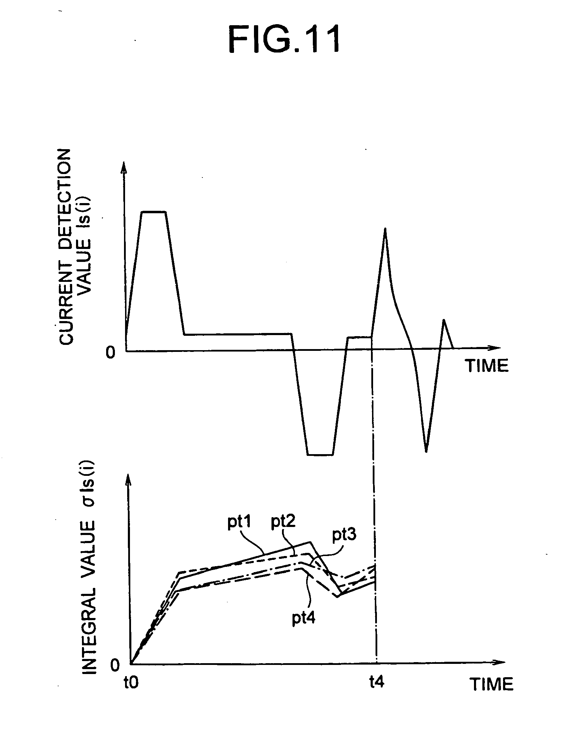

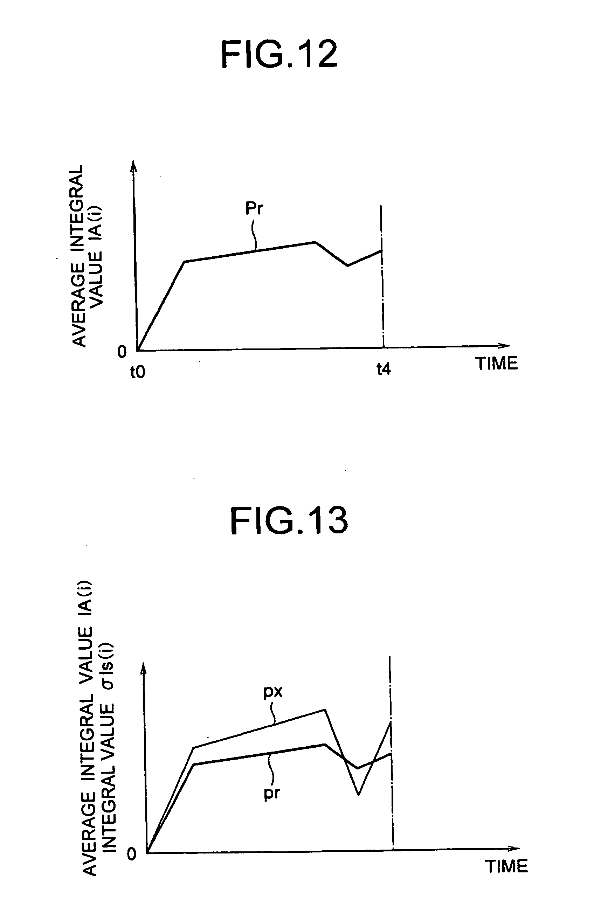

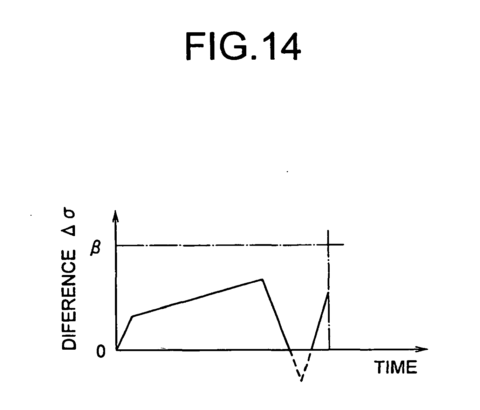

FIG. 1 is a pair of time charts showing the relation between motor rotational speed and current detection value in a conventional mold clamping apparatus; FIG. 2 is a time chart showing the relation between reference current value and current detection value in a conventional anomaly determination apparatus; FIG. 3 is a time chart showing the relation between reference current value and current detection value in another conventional anomaly determination apparatus; FIG. 4 is a first time chart showing a state of anomaly determination in the conventional anomaly determination apparatus; FIG. 5 is a second time chart showing a state of anomaly determination in the conventional anomaly determination apparatus; FIG. 6 is a functional block diagram of an injection molding machine according to an embodiment of the present invention; FIG. 7 is a schematic view showing a mold apparatus and a mold clamping apparatus in the embodiment of the present invention; FIG. 8 is a conceptual diagram of a drive control apparatus in the embodiment of the present invention; FIG. 9 is a block diagram of a control section and memory in the embodiment of the present invention; FIG. 10 is a block diagram showing operation of a reference pattern creation section in the embodiment of the present invention; FIG. 11 is a set of time charts showing the relation between current detection value and integral value in the embodiment of the present invention; FIG. 12 is a time chart showing averaged integral value in the embodiment of the present invention; FIG. 13 is a time chart showing the relation between an actual pattern and a reference pattern in the embodiment of the present invention; and FIG. 14 is a time chart showing a difference in the embodiment of the present invention.

## BEST MODE FOR CARRYING OUT THE INVENTION

An embodiment of the present invention will next be described in detail with reference to the drawings. In this case, a molding machine such as an injection molding machine will be described as an example machine apparatus.

FIG. 6 is a functional block diagram of an injection molding machine according to the embodiment of the present invention.

In FIG. 6, reference numeral 37 denotes a current detection value calculation section serving as an anomaly-determination-index obtainment processing means which obtains an anomaly determination index for determining whether an anomaly has occurred in the injection molding machine; 38 denotes an integrator which serves as an integration processing means for integrating the obtained anomaly determination index so as to obtain an integral value; and 53 denotes an anomaly determination section which serves as an anomaly determination processing means for determining, on the basis of the integral value, whether an anomaly has occurred in the injection molding machine.

FIG. 7 is a schematic view showing a mold apparatus and a mold clamping apparatus in the embodiment of the present invention; FIG. 8 is a conceptual diagram of a drive control apparatus in the embodiment of the present invention; FIG. 9 is a block diagram of a control section and memory in the embodiment of the present invention; FIG. 10 is a block diagram showing operation of a reference pattern creation section in the embodiment of the present invention; FIG. 11 is a set of time charts showing the relation between current detection value and integral value in the embodiment of the present invention; FIG. 12 is a time chart showing averaged integral value in the embodiment of the present invention; FIG. 13 is a time chart showing the relation between an actual pattern and a reference pattern in the embodiment of the present invention; and FIG. 14 is a time chart showing a difference in the embodiment of the present invention.

In these drawings, reference numeral 10 denotes a mold clamping apparatus of the injection molding machine; 11 denotes a stationary platen serving as a first stationary section; and 12 denotes a toggle support serving as a base plate and a second stationary section. Unillustrated tie bars are disposed to extend between the stationary platen 11 and the toggle support 12. Reference numeral 14 denotes a movable platen which serves as a movable section and which is disposed in opposition to the stationary platen 11 such that it can advance and retreat (move in the leftward and rightward directions in FIG. 7) along the tie bars. A stationary mold 15, serving as a first mold, is attached to a surface of the stationary platen 11 facing the movable platen 14. A movable mold 16, serving as a second mold, is attached to a surface of the movable platen 14 facing the stationary platen 11. The stationary mold 15 and the movable mold 16 constitute a mold apparatus. An unillustrated ejector apparatus is disposed at the rear end (left end in FIG. 7) of the movable platen 14. A motor 48 (M), serving as a drive section for mold clamping, is disposed at the rear end of the toggle support 12. The motor 48 includes a stator, and a rotor rotatably disposed radially inward of the stator. The stator includes U-phase, V-phase, and W-phase coils. The motor 48 can be driven through supply of U-phase current IU, V-phase current IV, and W-phase current IW to the respective coils. Of these currents IU, IV, and IW supplied to the respective coils, the currents IU and IV are detected by means of current sensors 26 and 27, serving as a current detection section. In the present embodiment, a servomotor is used for the motor 48.

In order to drive the motor 48, there are provided an AC power source section 42, serving as a drive source; a rectifier circuit 28 which rectifies AC current supplied from the power source section 42; a capacitor C which smoothes the rectified current and generates DC current; an inverter 29 which receives the DC current, generates currents IU, IV, IW for respective phases, and supplies them to the motor 48; etc. The inverter 29 includes six transistors each serving as a switching element.

A toggle mechanism 43 is disposed between the toggle support 12 and the movable platen 14. The toggle mechanism 43 includes toggle levers 44 pivotably connected to the toggle support 12 via pins p1; toggle arms 45 pivotably connected via pins p2 to brackets 14a formed on the rear end surface (left end surface in FIG. 7) of the movable platen 14 and pivotably connected to the toggle levers 44 via pins p3; and toggle levers 46 pivotably connected to the toggle levers 44 via pins p4 and pivotably connected to a crosshead 41 via pins p5. The crosshead 41 is disposed such that it can advance and retreat, and functions as a reciprocation member and a moving member.

A ball screw mechanism 21, serving as a motion direction conversion section, is disposed in order to convert rotational motion, which is generated upon drive of the motor 48, to linear motion, and transmit the linear motion to the crosshead 41. The ball screw mechanism 21 is composed of a ball screw shaft 51, which serves as a first conversion element and which is connected to an output shaft 35 of the motor 48, and a ball nut 23, which serves as a second conversion element and which is in screw-engagement with the ball screw shaft 51 and is attached to the crosshead 41. The ball screw mechanism 21, the crosshead 41, the motor 48, etc. constitute a mold clamping drive apparatus. In place of the ball screw mechanism 21, a trapezoidal screw mechanism, a roller screw mechanism, or the like may be used as the motion direction conversion section.

Accordingly, mold closing, mold clamping, and mold opening operations of the mold apparatus can be performed through advancement and retreat of the crosshead 41 effected upon drive of the motor 48. Specifically, at the time of mold closing, unillustrated mold open-close processing means of a control section 22 performs mold open-close processing so as to advance (move rightward in FIG. 7) the crosshead 41 through drive of the motor 48 in the regular rotational direction, to thereby advance the movable platen 14. Thus, the movable mold 16 is brought into contact with the stationary mold 15, whereby mold touch operation can be performed. The mold closing operation is performed in this manner. As a result of this, an unillustrated cavity is formed between the movable mold 16 and the stationary mold 15.

Subsequently, at the time of mold clamping, the mold open-close processing means further drives the motor 48 in the regular rotational direction. As a result, the toggle mechanism 43 generates a mold clamping force amplified at a toggle magnification ratio, whereby the movable mold 16 can be pressed against the stationary mold 15 with the mold clamping force. The mold clamping operation is performed in this manner. At this time, resin (molding material) injected from an injection nozzle of an unillustrated injection apparatus is charged into the cavity.

At the time of mold opening, the mold open-close processing means retracts (move leftward in FIG.

7) the crosshead 41 through drive of the motor 48 in the reverse rotational direction, to thereby retreat the movable platen 14. Thus, the movable mold 16 can be separated from the stationary mold 15. The mold opening operation is performed in this manner.

Incidentally, the mold open-close processing means controls, for example, motor rotational speed NM, which represents speed at which the movable platen 14 advances at the time of mold closing, and motor torque TM, which represents mold clamping force at the time of mold clamping.

For such control, an operator operates an operation panel 24, serving as an operation section, so as to set positions of the screw and the crosshead 41, etc. In response thereto, a target motor torque setting section 30, serving as a motor torque setting processing means of the mold open-close processing means, performs target motor torque setting processing so as to set a target motor torque TS, which represents a motor torque TM serving as a target. A current instruction value generation section 32, serving as a current instruction value generation processing means of the mold open-close processing means, performs current instruction value generation processing so as to calculate current instruction values ids and iqs on the basis of the target motor torque TS and send them to subtracters dm and qm.

Meanwhile, the control section 22 fetches detected currents iu and iv from the current sensors 26 and 27, and calculates a detected current iw on the basis of the detected currents iu and iv as follows:

$$iw = - iu - iv.$$

Subsequently, a three-phase to two-phase conversion section 31, serving as a three-phase to two-phase conversion processing means of the mold open-close processing means, performs three-phase to two-phase conversion processing so as to convert the detected currents iu, iv, and iw to d-axis current id and q-axis current iq on d-q coordinate axes, and send them to the subtracters dm and qm. The subtracter dm sends a deviation $\Delta$id between the current instruction value ids and the d-axis current id to a voltage instruction value generation section 33, serving as a voltage instruction value calculation processing means of the mold open-close processing means. Similarly, the subtracter qm sends a deviation $\Delta$iq between the current instruction value iqs and the q-axis current iq to the voltage instruction value generation section 33.

The voltage instruction value generation section 33 performs voltage instruction value calculation processing so as to calculate voltage instruction values vds and vqs such that the deviations $\Delta$id and $\Delta$iq become zero.

Subsequently, a two-phase to three-phase conversion section 34, serving as a two-phase to three-phase conversion processing means of the mold open-close processing means, performs two-phase to three-phase conversion processing so as to convert the voltage instruction values vds and vqs to voltage instruction values vus, vvs, and vws. A PWM signal generation section 36, serving as a PWM signal generation processing means of the mold open-close processing means, performs PWM signal generation processing so as to calculate pulse width modulation signals Mu, Mv, and Mw corresponding to the voltage instruction values vus, vvs, and vws and output the pulse width modulation signals Mu, Mv, and Mw to a drive circuit 25. The drive circuit 25 generates drive signals on the basis of the pulse width modulation signals Mu, Mv, and Mw, and sends them to the inverter 29. The inverter 29 receives the drive signals and switches (turns on and off) the respective transistors to thereby generate the currents IU, IV, and IW.

Incidentally, a foreign object may become caught between the stationary mold 15 and the movable mold 16. In such a case, when the drive of the motor 48 is continued, the mold apparatus, the toggle mechanism 43, the motor 48, etc. may be damaged. In view of this, the anomaly determination apparatus calculates, on the basis of the detected currents iu, iv, and iw, a current detection value as an anomaly determination index for determining whether an anomaly has occurred in the injection molding machine, determines, on the basis of the current detection value, whether an anomaly has occurred in the injection molding machine, and stops the injection molding machine when an anomaly occurs.

For such operation, the mold open-close processing means performs trial mold closing a preset number of times; i.e., n times, before ordinary molding is started. In this case, the trial is performed in a state in which resin has been injected under ordinary molding conditions. Notably, in the present embodiment, the trial is performed as an operation of the injection molding machine.

That is, a current detection value calculation section 37, serving as a current detection value calculation processing means of the control section 22, performs current detection value calculation processing so as to fetch the d-axis current id and the q-axis current iq at timings (hereinafter referred to as "sampling timings") i (i = 1, 2, ...) set at predetermined intervals for calculating the current detection value, and calculate the current detection value Is (i) (i = 1, 2, ...) as follows:

$$Is(i) = \sqrt{(id^2 + iq^2)}.$$

Notably, the anomaly-determination-index obtainment processing means is formed by the current detection value calculation section 37. The anomaly-determination-index obtainment processing means performs anomaly determination index obtainment processing so as to calculate and obtain the above-described current detection value Is(i), as an anomaly determination index which is obtained through drive of the motor 48 and is used to evaluate reproducibility.

Subsequently, an integrator 38, serving as an integration processing means of the control section 22, performs integration processing so as to integrate the current detection value Is(i) over a preset, predetermined period in the mold closing operation (in the present embodiment, a specific period between timing t0 at which the mold closing operation is started and timing t4 at which the mold touch operation is performed), calculate an integral value $\sigma$Is(i) (i = 1, 2, ...), which represents a cumulative value of the current detection value Is(i), for each sampling timing i, and store it in a memory 39, serving as a record apparatus. For such storing, a pattern record area 55 is formed in the memory 39. The pattern record area 55 includes n record areas AR1, AR2, ... ARn, the number of which corresponds to the number of times the trial mold closing operation has been performed. In each of the record areas AR1, AR2, ... ARn, the integral value $\sigma$Is(i) for each sampling timing i obtained during the corresponding trail mold closing operation is recorded. For example, the integral value $\sigma$Is(i) for each sampling timing i obtained during the first trail mold closing operation is recorded in the record area AR1; the integral value $\sigma$Is(i) for each sampling timing i obtained during the second trail mold closing operation is recorded in the record area AR2; and the integral value $\sigma$Is(i) for each sampling timing i obtained during the n-th trail mold closing operation is recorded in the record area ARn.

In this manner, as shown in FIG. 11, n (four in FIG. 11) patterns of the integral value $\sigma$Is(i); that is, integral value patterns pt1 to ptn (integral value patterns pt1 to pt4 in FIG. 11), are formed.

Subsequently, a reference pattern creation section 52, serving as an average integration processing means of the control section 22, performs average integration processing so as to read the integral value $\sigma$Is(i) for each sampling timing i from the record areas AR1, AR2, ... ARn, and create a reference pattern Pr as shown in FIG. 12 on the basis of the respective integral value $\sigma$Is(i). The reference pattern Pr is created by averaging the integral patterns pt1 to ptn in the above-described specific period.

For such averaging, the reference pattern creation section 52 includes an adder q1(+) and a divider q2(1/n), and calculates an average integral value IA(i), i.e., the average of the integral values $\sigma$Is(i) at each sampling timing i as follows:

$$\mathrm{IA(i)} = \Sigma\ \sigma\mathrm{Is(i)}/\mathrm{n}.$$

The pattern of the average integral value IA(i) serves as the reference pattern Pr.

Next, the reference pattern creation section 52 records the average integral value IA(i), which constitutes the reference pattern Pr, in a record area ARr formed in the pattern record area 55.

After the reference pattern Pr is created in this manner, ordinary molding is started, whereby the motor 48 is driven by the mold open-close processing means so as to perform the mold closing, mold clamping, and mold opening operations. During a period in which these operations are performed, the anomaly determination apparatus performs anomaly determination in accordance with the following steps.

First, when the detected currents iu, iv, and iw are read in the above-mentioned specific period upon performance of the mold closing, in the same manner as described above, the current detection value calculation section 37 calculates the current detection value Is(i) at the time when the mold closing is performed as an ordinary operation. The integrator 38 calculates the integral value $\sigma$Is(i) on the basis of the current detection value Is(i), and the reference pattern creation section 52 creates an actual value pattern px shown in FIG. 13 and representing an actual integral value pattern, on the basis of the integral value $\sigma$Is(i).

Subsequently, an anomaly determination section 53, serving as an anomaly determination processing means of the control section 22, performs anomaly determination processing so as to compare the actual value pattern px with the reference pattern pr. That is, the anomaly determination section 53 calculates the difference $\Delta\sigma$ between the integral value $\sigma$Is(i) of the actual value pattern px and the average integral value IA(i) of the reference pattern pr ($\Delta\sigma = \sigma$Is(i) - IA(i)), determines whether the difference $\Delta\sigma$ is greater than a preset threshold value $\beta$, and determines that an anomaly had occurred in the injection molding machine when the difference $\Delta\sigma$ is greater than the threshold value $\beta$. Notably, the threshold value $\beta$ is calculated on the basis of the expected maximum value of the difference $\Delta\sigma$. The anomaly determination apparatus is formed by the current detection value calculation section 37, the integrator 38, the reference pattern creation section 52, and the anomaly determination section 53.

Since, as described above, the current detection value Is(i) is calculated on the basis of the detected currents iu, iv, and iw, and the anomaly determination processing is performed on the basis of the integral value $\sigma$Is(i) of the current detection value Is(i), high-frequency components contained in the current detection value Is(i) can be removed at the time of anomaly determination processing. Accordingly, the anomaly determination processing can be performed accurately, and determination as to whether an anomaly has occurred in the injection molding machine can be performed in a reliable manner.

Further, since the anomaly determination processing is performed on the basis of the average integral value IA(i), generation of noises such as jumping and time shift can be suppressed further. Accordingly, the anomaly determination processing can be performed more accurately, and determination as to whether an anomaly has occurred in the injection molding machine can be performed in a more reliable manner.

When a noise stemming from jumping or time shift is generated in the integral value $\sigma Is(i)$ of the actual value pattern px, a noise stemming from jumping or time shift is also generated in average integral value IA(i) of the reference pattern pr. Therefore, the influence of the noise can be cancelled out through calculation of the difference $\Delta\sigma$. Accordingly, there is no possibility that an anomaly is erroneously determined to have occurred in the injection molding machine although no foreign object is caught between the stationary mold 15 and the movable mold 16.

Further, since a filter is not required to remove high-frequency components, it is possible to prevent generation of delay in the time required to obtain the anomaly determination index for determining whether an anomaly has occurred in the injection molding machine. Accordingly, the responsiveness of the anomaly determination apparatus can be improved.

Moreover, in the present embodiment, the current detection value Is(i) is calculated on the basis of the detected currents iu, iv, and iw, and the anomaly determination processing is performed on the basis of the current detection value Is(i). However, the anomaly determination processing can be performed on the basis of the deviations $\Delta id$ and $\Delta iq$, which are sent from the subtracters dm and qm to the voltage instruction value generation section 33, the voltage instruction values vds and vqs calculated in the voltage instruction value generation section 33, or the like.

In the present embodiment, the anomaly determination processing at the time when the mold closing operation is performed has been described. However, the present invention can be applied to, for example, anomaly determination processing performed when injection is performed by the injection apparatus and anomaly determination processing performed when an ejector pin is projected by an ejector apparatus. In this case, the anomaly determination processing means determines, for example, whether galling of the ejector pin has occurred.

No limitation is imposed on the anomaly determination index, so long as the index is information obtained through drive of the drive section and used for evaluating reproducibility of operation. It is possible to use a detection value, other than the current detection value, such as a voltage detection value, a speed detection value, a position detection value, a pressure detection value, a current instruction value, or a voltage instruction value. Further, it is possible to use a plurality of detection values selected from a current detection value, a voltage detection value, a speed detection value, a position detection value, a pressure detection value, a current instruction value, and a voltage instruction value.

The present invention is not limited to the above-described embodiments. Numeral modifications and variations of the present invention are possible without departing of the present invention, and they are not excluded from the scope of the present invention as defined by the appended claims.

INDUSTRIAL APPLICABILITY

The present invention can be utilized in a molding machine.

**Claims**

1. A molding machine, comprising:

   (a) anomaly-determination-index obtainment processing means (37) for obtaining an anomaly determination index through drive of a drive section (48) for determining whether an anomaly has occurred in the molding machine;
   **characterized by**
   (b) integration processing means (38) for integrating the anomaly determination index in a specific period when the molding machine is operated so as to obtain plural integral values;
   (c) average integration processing means (52) for calculating an average integral value representing the average of said plural integral values as a reference pattern, and
   (d) anomaly determination processing means (53) for determining whether an anomaly has occurred in the molding machine, on the basis of the result of the comparison between said reference pattern representing the pattern of average of said plural integral values of the anomaly determination index obtained when the molding machine is operated in advance, and an actual value pattern representing the pattern of the integral values obtainable when the molding machine is operated in an ordinary manner.

2. A molding machine according to claim 1, wherein the average integration processing means (52) is configured to calculate an average integral value representing the average of integral values respectively obtained in a plurality of times of trial operations of the molding machine, and wherein the anomaly determination processing means (53) is configured to determine whether an anomaly has occurred in the molding machine on the basis of a difference between an average value pattern representing the pattern of the average integral values and the actual value pattern representing the pattern of the integral values obtainable when the molding machine is operated in an ordinary manner.

3. A molding machine according to claim 1 or 2, wherein

the anomaly determination processing means (53) is configured to determine whether a foreign object is caught between a stationary mold (15) and a movable mold (16).

4. A molding machine according to any one of claims 1 to 3, wherein the anomaly determination processing means (53) is configured to determine whether galling of an ejector pin has occurred.

5. A control method for a molding machine, comprising the steps of:

(a) obtaining an anomaly determination index through drive of a drive section (48) for determining whether an anomaly has occurred in the molding machine;
**characterized by**
(b) integrating the anomaly determination index in a specific period when the molding machine is operated so as to obtain plural integral values;
(c) calculating an average integral value representing the average of said plural integral values as a reference pattern, and
(d) determining whether an anomaly has occurred in the molding machine, on the basis of the result of the comparison between said reference pattern representing a pattern of average of said plural integral values of the anomaly determination index obtained when the molding machine is operated in advance, and an actual value pattern representing the pattern of the integral values obtained when the molding machine is operated in an ordinary manner.

6. A control method according to claim 5, wherein the anomaly determination index is a detection value which is obtained through drive of the drive section (48) and used for evaluating reproducibility.

7. A control method according to claim 6, wherein the detection value is at least one of a current detection value, a voltage detection value, a speed detection value, a position detection value, a pressure detection value, a current instruction value, and a voltage instruction value.

8. A control method according to claim 5, wherein the anomaly determination index is a current detection value calculated when a drive section (48) is driven.

**Patentansprüche**

1. Formmaschine, die Folgendes aufweist:

(a) ein Verarbeitungsmittel (37) zur Erlangung eines Anomaliebestimmungsindexes, um einen Anomaliebestimmungsindex durch Antreiben eines Antriebsabschnitts (48) zu erhalten, um zu bestimmen, ob eine Anomalie in der Formmaschine aufgetreten ist;
**gekennzeichnet durch**:
(b) ein Integrationsverarbeitungsmittel (38) zum Integrieren des Anomaliebestimmungsindexes in einer spezifischen Periode, wenn die Formmaschine betrieben wird, um mehrere integrale Werte zu erhalten;
(c) Durchschnittsintegrationsverarbeitungsmittel (52) zum Berechnen eines durchschnittlichen, integralen Werts, der den Durchschnitt der mehreren integralen Werte als ein Referenzmuster repräsentiert, und
(d) ein Anomaliebestimmungsverarbeitungsmittel (53) zum Bestimmen, ob eine Anomalie in der Formmaschine aufgetreten ist, und zwar auf der Basis des Ergebnisses des Vergleichs zwischen dem Referenzmuster, das das Muster des Durchschnitts der mehreren, integralen Werte des Anomaliebestimmungsindexes repräsentiert, das erhalten wird, wenn die Formmaschine im Voraus betrieben wird, und einem Muster tatsächlicher Werte, das das Muster der integralen Werte repräsentiert, die erhalten werden können, wenn die Formmaschine in einer gewöhnlichen Art und Weise betrieben wird.

2. Formmaschine gemäß Anspruch 1, wobei das Durchschnittsintegrationsverarbeitungsmittel (52) konfiguriert ist, um einen durchschnittlichen, integralen Wert zu berechnen, der den Durchschnitt der integralen Werte repräsentiert, die jeweils in einer Vielzahl von Malen der Versuchsbetriebe der Formmaschine erhalten werden, und wobei das Anomaliebestimmungsverarbeitungsmittel (53) konfiguriert ist, um zu bestimmen, ob eine Anomalie in der Formmaschine aufgetreten ist, und zwar auf der Basis eines Unterschieds zwischen einem Durchschnittswertmuster, welches das Muster der durchschnittlichen integralen Werte repräsentiert, und einem Muster der tatsächlichen Werte, das das Muster der integralen Werte repräsentiert, das erhalten werden kann, wenn die Formmaschine in einer gewöhnlichen Art und Weise betrieben wird.

3. Formmaschine gemäß Anspruch 1 oder 2, wobei das Anomaliebestimmungsverarbeitungsmittel (53) konfiguriert ist, um zu bestimmen, ob ein Fremdobjekt zwischen einer stationären Form (15) und einer bewegbaren Form (16) eingefangen ist.

4. Formmaschine gemäß einem der Ansprüche 1 bis 3, wobei das Anomaliebestimmungsverarbeitungsmittel (53) konfiguriert ist, um zu bestimmen, ob ein Festfressen eines Auswerferstifts aufgetreten ist.

**5.** Steuerverfahren einer Formmaschine, das die folgenden Schritte aufweist:

(a) Erhalten eines Anomaliebestimmungsindexes durch Antreiben eines Antriebsabschnitts (48), um zu bestimmen, ob eine Anomalie in der Formmaschine aufgetreten ist;
**gekennzeichnet durch**:
(b) Integrieren des Anomaliebestimmungsindexes in einer spezifischen Periode, wenn die Formmaschine betrieben wird, um mehrere, integrale Werte zu erhalten;
(c) Berechnen eines durchschnittlichen, integralen Werts, der den Durchschnitt der integralen Werte als ein Referenzmuster repräsentiert, und
(d) Bestimmen, ob eine Anomalie in der Formmaschine aufgetreten ist, und zwar auf der Basis des Ergebnisses des Vergleichs zwischen dem Referenzmuster, das ein Muster des Durchschnitts der mehreren, integralen Werte des Anomaliebestimmungsindexes darstellt, die erhalten werden, wenn die Formmaschine im Voraus betrieben wird, und eines Musters der tatsächlichen Werte, welches das Muster der integralen Werte darstellt, die erhalten werden, wenn die Formmaschine in einer gewöhnlichen Art und Weise betrieben wird.

**6.** Steuerverfahren gemäß Anspruch 5, wobei der Anomaliebestimmungsindex ein Detektionswert ist, der durch Antreiben des Antriebsabschnitts (48) erhalten und verwendet wird, um die Reproduzierbarkeit zu bewerten.

**7.** Steuerverfahren gemäß Anspruch 6, wobei der Detektionswert entweder ein Stromdetektionswert, ein Spannungsdetektionswert, ein Geschwindigkeitsdetektionswert, ein Positionsdetektionswert, ein Druckdetektionswert, ein Stromanweisungswert oder ein Spannungsanweisungswert ist.

**8.** Steuerverfahren gemäß Anspruch 5, wobei der Anomaliebestimmungsindex ein Stromdetektionswert ist, der berechnet wird, wenn ein Antriebsabschnitt (48) angetrieben wird.

**Revendications**

**1.** Machine de moulage comprenant :

(a) des moyens de traitement d'obtention d'un index de détermination d'anomalie (37) pour obtenir un index de détermination d'anomalie par le pilotage d'une section de pilotage (48) pour déterminer si une anomalie a eu lieu dans la machine de moulage ;
**caractérisé par**

(b) des moyens de traitement d'intégration (38) pour intégrer l'index de détermination d'anomalie dans une période spécifique lorsque la machine de moulage est actionnée de façon à obtenir plusieurs valeurs d'intégrale ;
(c) des moyens de traitement d'intégration moyenne (52) pour calculer une valeur d'intégrale moyenne représentant la moyenne de la pluralité de valeurs d'intégrale en tant que modèle de référence ; et
(d) des moyens de traitement de détermination d'anomalie (53) pour déterminer si une anomalie a eu lieu dans la machine de moulage, sur la base du résultat de la comparaison entre le modèle de référence représentant le modèle de moyenne de la pluralité de valeurs d'intégrale de l'index de détermination d'anomalie obtenues lorsque la machine de moulage est actionnée à l'avance, et un modèle de valeurs réelles représentant le modèle des valeurs d'intégrale pouvant être obtenues lorsque la machine de moulage est actionnée d'une manière ordinaire.

**2.** Machine de moulage selon la revendication 1, dans laquelle
les moyens de traitement d'intégration moyenne (52) sont agencés pour calculer une valeur d'intégrale moyenne représentant la moyenne de valeurs d'intégrale obtenues respectivement dans une pluralité de périodes d'opération d'essai de la machine de moulage, et dans laquelle
les moyens de traitement de détermination d'anomalie (53) sont agencés pour déterminer si une anomalie a eu lieu dans la machine de moulage sur la base d'une différence entre un modèle de valeurs moyennes représentant le modèle des valeurs d'intégrale moyennes et le modèle de valeurs réelles représentant le modèle des valeurs d'intégrale pouvant être obtenues lorsque la machine de moulage est actionnée d'une manière ordinaire.

**3.** Machine de moulage selon la revendication 1 ou 2, dans laquelle les moyens de traitement de détermination d'anomalie (53) sont agencés pour déterminer si un objet étranger est pris entre un moule fixe (15) et un moule mobile (16).

**4.** Machine de moulage selon l'une quelconque des revendications 1 à 3, dans laquelle les moyens de traitement de détermination d'anomalie (53) sont agencés pour déterminer si un grippage d'une broche d'injecteur a eu lieu.

**5.** Procédé de commande d'une machine de moulage, comprenant les étapes suivantes :

(a) obtenir un index de détermination d'anomalie par un pilotage d'une section de pilotage (48) pour déterminer si une anomalie a eu lieu dans la machine de moulage ;

**caractérisé par** les étapes suivantes

(b) intégrer l'index de détermination d'anomalie dans une période spécifique lorsque la machine de moulage est actionnée de façon à obtenir une pluralité de valeurs d'intégrale ;

(c) calculer une valeur d'intégrale moyenne représentant la moyenne de la pluralité de valeurs d'intégrale en tant que modèle de référence, et

(d) déterminer si une anomalie a eu lieu dans la machine de moulage, sur la base du résultat de la comparaison entre le modèle de référence représentant un modèle de moyenne de la pluralité de valeurs d'intégrale de l'index de détermination d'anomalie obtenues lorsque la machine de moulage est actionnée à l'avance, et un modèle de valeurs réelles représentant le modèle des valeurs d'intégrale obtenues lorsque la machine de moulage est actionnée d'une manière ordinaire.

6. Procédé de commande selon la revendication 5, dans lequel l'index de détermination d'anomalie est une valeur de détection qui est obtenue par l'intermédiaire d'un pilotage de la section de pilotage (48) et utilisée pour évaluer une reproductibilité.

7. Procédé de commande selon la revendication 6, dans lequel la valeur de détection est au moins l'une d'une valeur de détection courante, d'une valeur de détection de tension, d'une valeur de détection de vitesse, d'une valeur de détection de position, d'une valeur de détection de pression, d'une valeur d'instruction courante, et d'une valeur d'instruction de tension.

8. Procédé de commande selon la revendication 5, dans lequel l'index de détermination d'anomalie est une valeur de détection courante calculée lorsque la section de pilotage (48) est pilotée.

# FIG. 1
## (PRIOR ART)

# FIG. 2
## (PRIOR ART)

# FIG. 3
## (PRIOR ART)

# FIG. 4
## (PRIOR ART)

# FIG. 5
## (PRIOR ART)

# FIG. 6

```
┌─────────────────────────┐
│   CURRENT  DETECTION     │
│   VALUE  CALCULATION     │──── 37
│       SECTION            │
└─────────────────────────┘
            │
            ▼
┌─────────────────────────┐
│      INTEGRATOR          │──── 38
└─────────────────────────┘
            │
            ▼
┌─────────────────────────┐
│  ANOMALY  DETERMINATION  │──── 53
│       SECTION            │
└─────────────────────────┘
```

# FIG. 7

EP 1 640 136 B1

# FIG. 8

# FIG. 9

EP 1 640 136 B1

# FIG.10

# FIG.11

# FIG.12

# FIG.13

# FIG.14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1141715 A
- JP 1196322 A
- DE 19925302 A1
- US 2002005599 A1